# EUROPEAN PATENT APPLICATION

(11) **EP 4 607 014 A1**
(43) Date of publication of application: **27.08.2025**
(21) Application number: 25158115.3
(22) Date of filing: 14.02.2025
(51) Int. Cl.: F02C 9/18

(54) **SYSTEM AND METHOD FOR DETECTING A PERFORMANCE DEGRADATION OF A BLEED-OFF VALVE**

(30) Priority: 19.02.2024 US 202418444871
(71) Applicant: PRATT & WHITNEY CANADA CORP., Longueuil, Québec J4G 1A1 (CA)
(72) Inventor: DURANLEAU-HENDRICKX, Louis, (01BE5) Longueuil, J4G 1A1 (CA)
(74) Representative: Dehns

(57) **Abstract**

A method for detecting a performance degradation of a pneumatic bleed-off valve (12) installed in a compressor section of a gas turbine engine (10) includes acquiring a first relationship between a pressure ratio across a compressor (22) of the engine (10) and a rotational speed of a spool of the engine (10) during an acceleration of the spool, and acquiring a second relationship between the pressure ratio across the compressor (22) and the rotational speed of the spool during the deceleration of the spool. A cross-over rotational speed corresponding to an intersection of the first relationship and the second relationship is determined. The performance degradation of the pneumatic bleed-off valve (12) is detected when the cross-over rotational speed is outside a prescribed range.

## Description

### TECHNICAL FIELD

The disclosure relates generally to gas turbine engines, and more particularly to detecting a performance degradation of a bleed-off valve installed in a gas turbine engine.

### BACKGROUND

A gas turbine engine used for aircraft propulsion may include a bleed-off valve to regulate air pressure in a compressor section of the gas turbine engine. Proper operation of the bleed-off valve promotes an efficient operation of the gas turbine engine and also protects the gas turbine engine from aerodynamic instabilities such as compressor stall or surge. Improvement in detecting a performance degradation of a bleed-off valve is desirable.

### SUMMARY

According to one aspect of the present invention, there is provided a method for detecting a performance degradation of a pneumatic bleed-off valve installed in a compressor section of a gas turbine engine, the method comprising: operating the gas turbine engine to cause an acceleration of a spool of the gas turbine engine from a first rotational speed to a second rotational speed, the spool including a compressor of the gas turbine engine; during the acceleration of the spool, acquiring a first relationship between a pressure ratio across the compressor and a rotational speed of the spool; operating the gas turbine engine to cause a deceleration of the spool from the second rotational speed to the first rotational speed; during the deceleration of the spool, acquiring a second relationship between the pressure ratio across the compressor and the rotational speed of the spool; determining a cross-over rotational speed corresponding to an intersection of the first relationship and the second relationship, the cross-over rotational speed being between the first rotational speed and the second rotational speed; and detecting (or determining) the performance degradation of the pneumatic bleed-off valve when the cross-over rotational speed is lower than a rotational speed threshold.

According to another aspect of the present invention, there is provided a method for detecting a slow modulation time of a pneumatically-actuated bleed-off valve without positional feedback from the bleed-off valve, the bleed-off valve being installed at an intermediate stage of a compressor section of a gas turbine engine, the method comprising: operating the gas turbine engine to cause an acceleration of a spool of the gas turbine engine from a first rotational speed to a second rotational speed, the spool including a compressor of the gas turbine engine; during the acceleration of the spool: causing the bleed-off valve to transition from an open position to a closed position; and acquiring a first relationship between a pressure ratio across the compressor and a rotational speed of the spool; operating the gas turbine engine to cause a deceleration of the spool from the second rotational speed to the first rotational speed; during the deceleration of the spool: causing the bleed-off valve to transition from the closed position to the open position; and acquiring a second relationship between the pressure ratio across the compressor and the rotational speed of the spool; determining a cross-over rotational speed corresponding to an intersection of the first relationship and the second relationship, the cross-over rotational speed being between the first rotational speed and the second rotational speed; and detecting the slow modulation time of the bleed-off valve when the cross-over rotational speed is lower than a rotational speed threshold.

According to a further aspect of the present invention, there is provided a system for detecting a performance degradation of a pneumatic bleed-off valve installed in a compressor section of a gas turbine engine, the system comprising: sensors configured to acquire: a rotational speed of a spool of the gas turbine engine, the spool including a compressor of the gas turbine engine; and a pressure ratio across the compressor; one or more data processors; and non-transitory machine-readable memory storing: a first relationship between a pressure ratio across the compressor and the rotational speed of the spool acquired during an acceleration of the spool using the sensors; a second relationship between the pressure ratio across the compressor and the rotational speed of the spool acquired during a deceleration of the spool using the sensors; and instructions executable by the one or more data processors and configured to cause the one or more data processors to: determine a cross-over rotational speed corresponding to an intersection of the first relationship and the second relationship; and detect the performance degradation of the pneumatic bleed-off valve when the cross-over rotational speed is lower than a rotational speed threshold.

Optionally, and in accordance with any of the above, the performance degradation is an increased response time of the pneumatic bleed-off valve.

Optionally, and in accordance with any of the above, the response time is the time taken for the pneumatic bleed-off valve to modulate (e.g. close and/or open) for a given change in engine speed (i.e. acceleration or deceleration).

Optionally, and in accordance with any of the above, the response time is in response to a change in pressure differential across a valve member of the pneumatic bleed-off valve.

Optionally, and in accordance with any of the above, the method comprises restricting an allowable acceleration of the gas turbine engine after detecting the performance degradation.

Optionally, and in accordance with any of the above, the pressure ratio across the compressor is an overall pressure ratio across an entirety of the compressor.

Optionally, and in accordance with any of the above, the pressure ratio across the compressor is a pressure ratio across only part of the compressor less than an entirety of the compressor.

Optionally, and in accordance with any of the above, the method is performed during flight of an aircraft propelled by the gas turbine engine.

Optionally, and in accordance with any of the above, the rotational speed threshold is universal for a plurality of gas turbine engines.

Optionally, and in accordance with any of the above, the rotational speed threshold is variable based on an ambient condition in which the gas turbine engine is operating.

Optionally, and in accordance with any of the above, the method comprises: receiving an engine-specific baseline cross-over rotational speed exhibited by the pneumatic bleed-off valve installed in the gas turbine engine when the pneumatic bleed-off valve was in a new state; and determining the rotational speed threshold based on the engine-specific baseline cross-over rotational speed.

Optionally, and in accordance with any of the above, determining the rotational speed threshold includes subtracting a prescribed value from the engine-specific baseline cross-over rotational speed.

Optionally, and in accordance with any of the above, the method comprises, before detecting the performance degradation: determining that an acceleration rate of the spool during the acceleration of the spool meets an acceleration criterion; and determining that a deceleration rate of the spool during the deceleration of the spool meets a deceleration criterion.

Optionally, and in accordance with any of the above, the method comprises: while operating the gas turbine engine with the bleed-off valve in a new state, determining a baseline cross-over rotational speed specifically associated with the bleed-off valve in the new state; and before detecting the slow modulation time of the bleed-off valve, determining the rotational speed threshold by adding a margin to the baseline cross-over rotational speed.

Optionally, and in accordance with any of the above: the slow modulation time of the pneumatically-actuated bleed-off valve is detected during flight of an aircraft propelled by the gas turbine engine; and the method includes generating an annunciation in response to detecting the slow modulation time.

Optionally, and in accordance with any of the above, the method comprises, before detecting the slow modulation time of the pneumatically-actuated bleed-off valve: determining that an acceleration rate of the spool during the acceleration of the spool meets an acceleration criterion; and determining that a deceleration rate of the spool during the deceleration of the spool meets a deceleration criterion.

Optionally, and in accordance with any of the above, the one or more data processors are part of a controller of the gas turbine engine and disposed onboard an aircraft propelled by the gas turbine engine.

Optionally, and in accordance with any of the above: the non-transitory machine-readable memory stores an engine-specific baseline cross-over rotational speed exhibited by the pneumatic bleed-off valve when the pneumatic bleed-off valve was in a new state; and the instructions are configured to cause the one or more data processors to determine the threshold based on the engine-specific baseline cross-over rotational speed.

Optionally, and in accordance with any of the above: the sensors are configured to acquire an ambient condition in which the gas turbine engine is operating; and the instructions are configured to cause the one or more data processors to determine the threshold based on the ambient condition.
Optionally, and in accordance with any of the above, the system is devoid of positional feedback from the pneumatic bleed-off valve.

Further details of these and other aspects of the subject matter of this application will be apparent from the detailed description included below and the drawings.

### DESCRIPTION OF THE DRAWINGS

Reference is now made to the accompanying drawings, in which:
FIG. 1 shows an axial cross-section view of a turboprop gas turbine engine including a bleed-off valve, and a schematic representation of a system for detecting a performance degradation of the bleed-off valve;
FIGS. 2A and 2B show an axial cross-section view of an exemplary pneumatic bleed-off valve in a closed state and in an open state respectively;
FIG. 3 is another schematic representation of the system for detecting the performance degradation of the bleed-off valve;
FIG. 4 is a flow diagram of an exemplary method for detecting the performance degradation of the bleed-off valve;
FIG. 5 is a plot showing baseline first and second relationships between a pressure ratio across the compressor of the gas turbine engine and a rotational speed of a spool including the compressor during an acceleration and a deceleration of the spool;
FIG. 6 is a plot showing actual first and second relationships between the pressure ratio across the compressor of the gas turbine engine and the rotational speed of the spool during the acceleration and the deceleration of the spool in relation to the baseline first and second relationships of FIG. 5;
FIG. 7 is a flow diagram of another exemplary method for detecting the performance degradation of the bleed-off valve; and
FIG. 8 is a flow diagram of another exemplary method for detecting the performance degradation of the bleed-off valve.

### DETAILED DESCRIPTION

The present disclosure describes systems and methods for detecting a performance degradation of a pneumatically-actuated bleed-off valve that is installed in a gas turbine engine. In some embodiments, the systems and methods described herein may promote a relatively early detection of the performance degradation of the bleed-off valve to reduce a likelihood of an undesirable aerodynamic instability inside of the engine. In some embodiments, the systems and methods described herein may facilitate an in-situ (e.g., on-wing, during flight) evaluation of the pneumatic bleed-off valve by monitoring one or more characteristics of the compressor during an acceleration and deceleration of the compressor and the engine. In the event that a degradation of performance is detected, a suitable alert may be generate to signal that a maintenance action is required. Aspects of various embodiments are described through reference to the drawings.

The term "connected" may include both direct connection (in which two elements that are connected to each other contact each other) and indirect connection (in which at least one additional element is located between the two elements). The term "substantially" as used herein may be applied to modify any quantitative representation which could permissibly vary without resulting in a change in the basic function to which it is related. As used herein, the singular forms "a," "an," and "the" are intended to include the plural forms as well, unless the context clearly indicates otherwise.

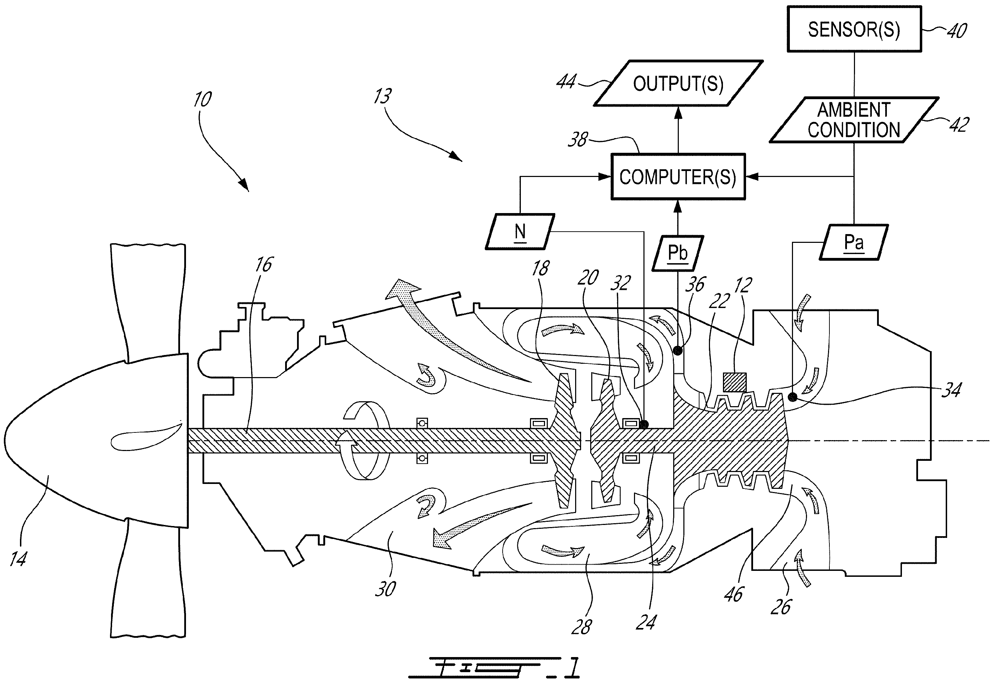

FIG. 1 shows a schematic axial cross-section view of an exemplary reverse flow turboprop gas turbine engine 10 (referred hereinafter as "engine 10") including one or more pneumatic bleed-off valves 12 (referred hereinafter in the singular as "BOV 12"), and a schematic representation of system 13 for detecting a performance degradation of BOV 12. Even though the following description and accompanying drawings specifically refer to a turboprop gas turbine engine as an example, aspects of the present disclosure may be equally applicable to other types of gas turbine engines including turboshaft engines, turbofan engines, turbojet engines, industrial gas turbine engines, and auxiliary power units. Engine 10 may be mounted to an aircraft for propelling the aircraft. Engine 10 may be of a type preferably provided for use in subsonic flight to drive a load such as propeller 14 (or other air mover) via low-pressure shaft 16 (sometimes called "power shaft") coupled to low-pressure turbine 18. Low-pressure turbine 18 and low-pressure shaft 16 may be part of a first spool of engine 10 known as a low-pressure spool. Engine 10 may include a second or high-pressure spool including high-pressure turbine 20, (e.g., multistage) compressor 22 and high-pressure shaft 24.

Compressor 22 may draw ambient air into engine 10 via annular radial air inlet duct 26, increase the pressure of the drawn air and deliver the pressurized air to combustor 28 where the pressurized air is mixed with fuel and ignited for generating an annular stream of hot combustion gas. High-pressure turbine 20 may extract energy from the hot expanding combustion gas and thereby drive compressor 22. The hot combustion gas leaving high-pressure turbine 20 may be accelerated as it further expands, flows through and drives low-pressure turbine 18, which in turn drives propeller 14. The combustion gas may then exit engine 10 via exhaust duct 30.

System 13 may include a plurality of sensors for acquiring different operating parameters of engine 10. For example, system 13 may include one or more shaft speed sensor(s) 32 (referred hereinafter in the singular) for acquiring a rotational speed N of the high-pressure spool which includes at least part of compressor 22. In some embodiments, speed sensor 32 may include a Hall effect sensor or a magnetoresistive sensor for example. System 13 may include one or more pressure sensors 34, 36 that may be used to acquire a pressure ratio (PR) across part of compressor 22 and/or across an entirety of compressor 22. In some embodiments, PR may be acquired using individual pressure sensors 34, 36 disposed at different locations along gas path 46 including compressor 22. First pressure sensor 34 may be disposed at or near an inlet of compressor 22 and may be used to acquire first pressure Pa of the air received in compressor 22. Second pressure sensor 36 may be disposed at or near an outlet of the compressor 22 and may be used to acquire second pressure Pb of the air discharged from compressor 22 and upstream of combustor 28. In various embodiments, pressure sensors 34, 36 may be of a strain gauge type, of a piezoelectric type, of a capacitive type or of another suitable type of pressure sensor for example.

Pressure sensors 34, 36 may be located as shown in FIG. 1 in order to determine an overall PR of compressor 22 across an entirety of compressor 22. Alternatively, in some embodiments, first pressure sensor 34 and/or second pressure sensor 36 may be disposed at an intermediate stage of compressor 22 so that the PR may be a partial PR across only a part of compressor 22 less than an entirety of compressor 22.

System 13 may include one or more ambient condition sensors 40, which may be configured to acquire one or more sensed parameters indicative of ambient condition 42 in which engine 10 is currently operating. Such sensed parameters may include an outside temperature, an altitude of an aircraft being propelled by engine 10, an airspeed of the aircraft and/or any other parameter(s) determined to influence the operation of BOV 12 during the methods described herein.

Speed sensor 32, pressure sensors 34, 36 and optionally ambient condition sensor(s) 40 may be operatively connected to computer 38 so that shaft speed N, first and second pressures Pa, Pb, and optionally ambient condition 42 may be used by computer 38 to detect a performance degradation of BOV 12. In response to detecting such performance degradation of BOV 12, computer 38 may generate output 44. In some embodiments, output 44 may include a message to maintenance personnel indicating that a response time of BOV 12 is no longer adequate to meet compressor surge margin requirements, and that maintenance associated with BOV 12 is required. In some embodiments, output 44 may include an annunciation in a cockpit of the aircraft to alert the flight crew. Alternatively or in addition, output 44 may include a signal that initiates a software accommodation onboard the aircraft to mitigate the performance degradation of BOV 12. Such software accommodation may include computer 38 or other controller of engine 10 imposing one or more restrictions on the operation of engine 10 to reduce the allowable acceleration of engine 10 and thereby reduce the risk of compressor surge for example. Such software accommodation may be activated during flight to permit the aircraft to safely land and, if appropriate, to safely complete its mission.

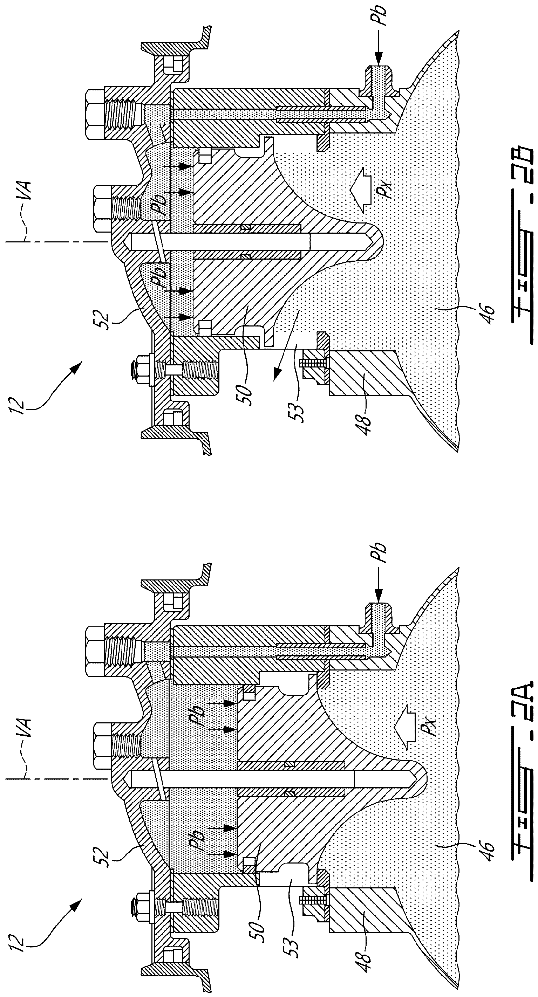

FIGS. 2A and 2B show an axial cross-section view of an exemplary pneumatic BOV 12 in a closed state and in an open state respectively. BOV 12 may be installed at an intermediate stage of compressor 22 between the inlet of compressor 22 and the outlet of compressor 22. BOV 12 may be mounted to engine casing 48 defining a radially outer boundary of gas path 46. BOV 12 may include a movable valve member 50 movably received inside housing 52. Valve member 50 may be movable (e.g., slidable, translatable) along valve axis VA between the valve-closed position shown in FIG. 2A and the valve-open position shown in FIG. 2B. Valve member 50 may be in fluid communication with gas path 46 via an opening defined in casing 48. In the valve-closed position, valve member 50 may substantially prevent pressurized air from being discharged from gas path 46. In the valve-open position, valve member 50 may permit pressurized air to be discharged from gas path 46 via outlet 53 formed in housing 52. In the valve-open position, air may be discharged from outlet 53 to the ambient environment or to another destination. In some embodiments, valve member 50 may be spring-loaded and biased toward the valve-open position.

BOV 12 may be pneumatically actuated based on a pressure differential across valve member 50. For example, a radially outer side of valve member 50 relative to gas path 46 may be in fluid communication with a location along gas path 46 that is downstream of BOV 12. For example, the radially outer side of valve member 50 may be exposed to second pressure Pb at the outlet of compressor 22. The opposite radially inner side of valve member 50 maybe exposed to intermediate pressure Px at the intermediate position of BOV 12 along compressor 22. The intermediate position may be located between the inlet and the outlet of compressor 22 so that during normal operation of compressor 22, second pressure Pb may be greater than intermediate pressure Px (i.e., Pb > Px), and intermediate pressure Px may be greater than first pressure Pa (i.e., Px > Pa). An increase in second pressure Pb relative to intermediate pressure Px may urge valve member 50 toward the valve-closed position. An increase in intermediate pressure Px relative to second pressure Pb may urge valve member 50 toward the valve-open position. The resilient biasing of valve member 50 toward the valve-open position (e.g., provided by a spring) may be calibrated to permit desired modulation of valve member 50 based on a difference between second pressure Pb and intermediate pressure Px.

BOV 12 may serve to bleed pressurized air from an intermediate station of compressor 22 during low and mid power operation. The normal operation of BOV 12 may prevent a compressor instability (e.g., stall or surge) in a location along gas path 46 that is downstream of BOV 12. The modulation of valve member 50 between the valve-closed position and the valve-open position may be pneumatically actuated (i.e., controlled) based on the magnitudes of second pressure Pb and intermediate pressure Px. In other words, BOV 12 may not be electronically controlled. BOV 12 also may not provide any direct feedback about the axial position of valve member 50 along valve axis VA. In other words, system 13 may be devoid of positional feedback from BOV 12. Accordingly, positional feedback that could otherwise be available in some electronically controlled valves, may not be available to assess the actuation response time of BOV 12 in response to a change in pressure difference between second pressure Pb and intermediate pressure Px.

In some situations, BOV 12 can suffer from an increased response time, meaning that BOV 12 may become slower to modulate (close and/or open) for a given change in engine speed (i.e., acceleration or deceleration). The increased response time could be caused by one or more factors such as wear resulting in an increase in sliding friction between valve member 50 and housing 52, or an inadequate sealing between valve member 50 and housing 52 for example. An increased response time of BOV 12 may be undesirable for engine operability. For example, during an acceleration of the operating speed of engine 10 causing BOV 12 to transition from the valve-open position to the valve-closed position, the increased response time may cause BOV 12 to stay open longer than intended and this may cause engine 10 to suffer from a higher turbine temperature and be exposed to an increased risk of a subsequent sudden closure of BOV 12 causing a non-linear power/thrust increase. During a deceleration of the operating speed of engine 10 causing BOV 12 to transition from the valve-closed position to the valve-open position, the increased response time may cause BOV 12 to remain closed longer than intended and this may cause engine 10 to suffer from a surge/stall instability since BOV 12 would not adequately perform its primary function of offloading one or more stages of compressor 22 upstream of BOV 12.

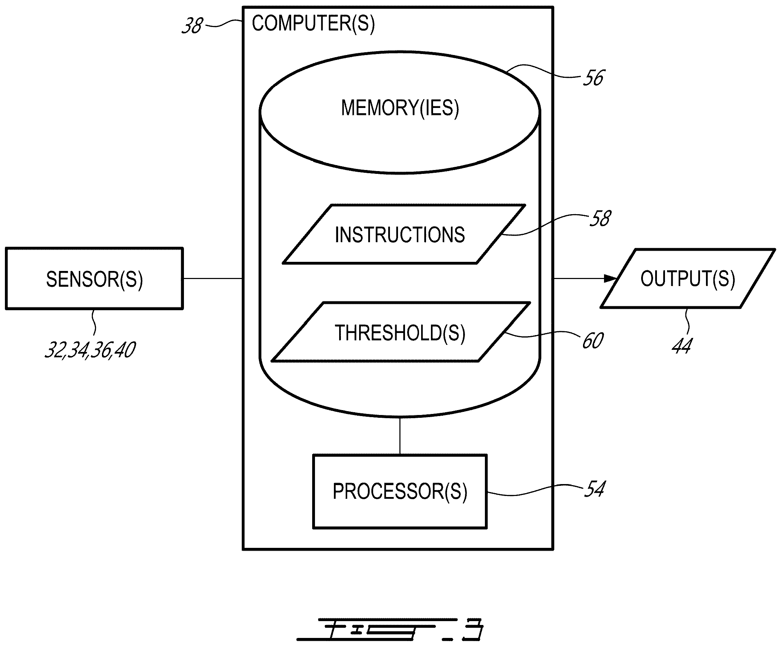

FIG. 3 is another schematic representation of system 13 for detecting the performance degradation of BOV 12. System 13 may include computer 38 having one or more data processors 54 (referred hereinafter in the singular) and non-transitory machine-readable memory(ies) 56 (referred hereinafter in the singular). Computer 38 may be configured to detect the performance degradation of BOV 12 based on signals acquired via one or more sensors 32, 34, 36, 40, generate output(s) 44 and optionally also perform other tasks. In some embodiments, computer 38 may be dedicated only to system 13. Alternatively, computer 38 may include or be part of a controller (e.g., electronic engine controller (EEC)) and may perform additional functions not necessarily associated with system 13. Computer 38 may receive input(s) such as signal(s) from sensor(s) 32, 34, 36, 40, perform one or more procedures or steps defined by instructions 58 (e.g., software) stored in memory 56 and executable by processor(s) 54 to generate one or more outputs 44.

Processor 54 may include any suitable device(s) configured to cause a series of steps to be performed by computer 38 so as to implement a controller-implemented process such that instructions 58, when executed by computer 38 or other programmable apparatus, may cause the functions/acts specified in the methods described herein to be executed. Processor(s) 54 may include, for example, any type of general-purpose microprocessor or microcontroller, a digital signal processing (DSP) processor, an integrated circuit, a field programmable gate array (FPGA), a reconfigurable processor, other suitably programmed or programmable logic circuits, or any combination thereof.

Memory 56 may include any suitable machine-readable storage medium. Memory 56 may include non-transitory controller readable storage medium such as, for example, but not limited to, an electronic, magnetic, optical, electromagnetic, infrared, or semiconductor system, apparatus, or device, or any suitable combination of the foregoing. Memory 56 may include any storage means (e.g., devices) suitable for retrievably storing machine-readable instructions 58 executable by processor(s).

One or more thresholds 60 may also be stored in memory 56 or otherwise be available to computer 38 for detecting the mechanical transmission failure. Threshold(s) 60 may have the form of a look-up table with rotational speed values and/or ranges of rotational speeds applicable to one or more operating conditions of system 13 and/or of engine 10.

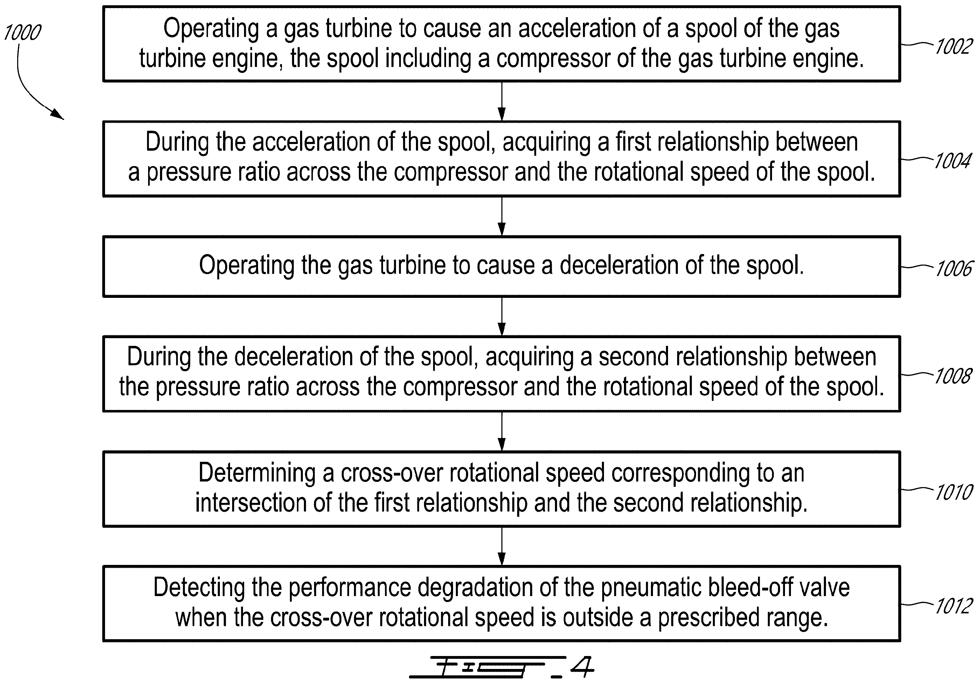

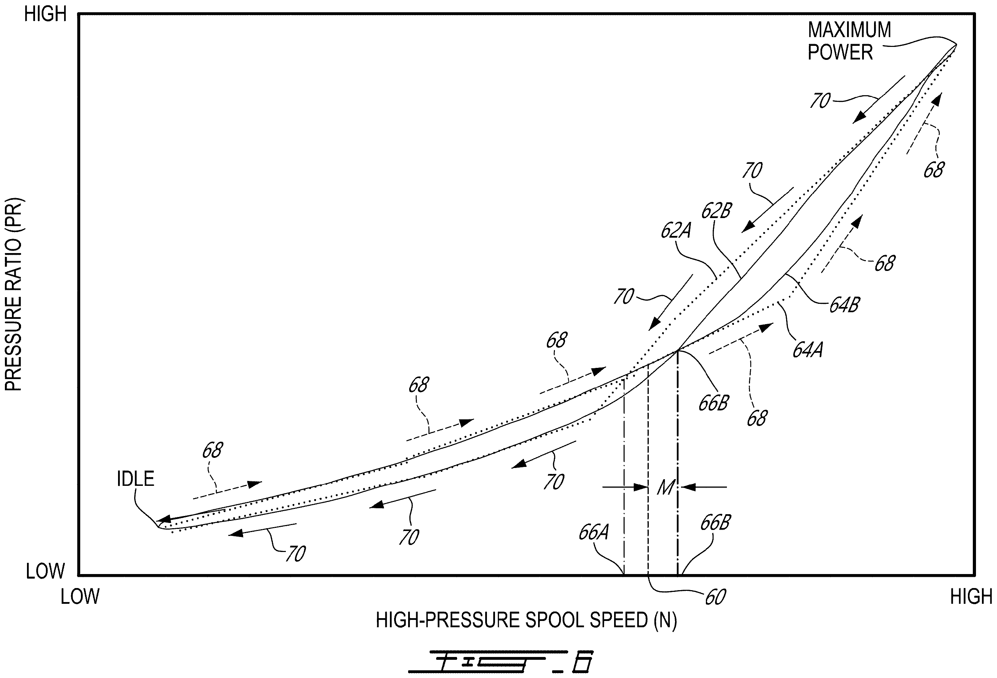

FIG. 4 is a flow diagram of an exemplary method 1000 for detecting the performance degradation of BOV 12 or of another bleed-off valve without direct positional feedback from BOV 12. Method 1000 may be performed using system 13 described herein or using another system. For example, machine-readable instructions 58 may be configured to cause computer 38 to perform at least part of method 1000. Aspects of method 1000 may be combined with aspects of other methods described herein. Method 1000 may be performed when BOV 12 is installed in a compressor section of engine 10 (e.g., in situ). Method 1000 may include elements of system 13. In various embodiments, method 1000 may include:
operating engine 10 to cause an acceleration of the (e.g., high-pressure) spool of engine 10, the spool including compressor 22 of engine 10 (block 1002);
during the acceleration of the spool, acquiring actual first relationship 62A (shown in FIG. 6) between the PR across compressor 22 and rotational speed N of the spool (block 1004);
operating engine 10 to cause a deceleration of the spool (block 1006);
during the deceleration of the spool, acquiring actual second relationship 64A (shown in FIG. 6) between the PR across compressor 22 and rotational speed N of the spool (block 1008);
determining cross-over rotational speed 66A (shown in FIG. 6) corresponding to an intersection of actual first relationship 62A and actual second relationship 64A (block 1010); and
detecting the performance degradation of BOV 12 when cross-over rotational speed 66A is lower than rotational speed threshold 60 (shown in FIG. 6) (block 1012).

Aspects of method 1000 are describe below in reference to the subsequent figures.

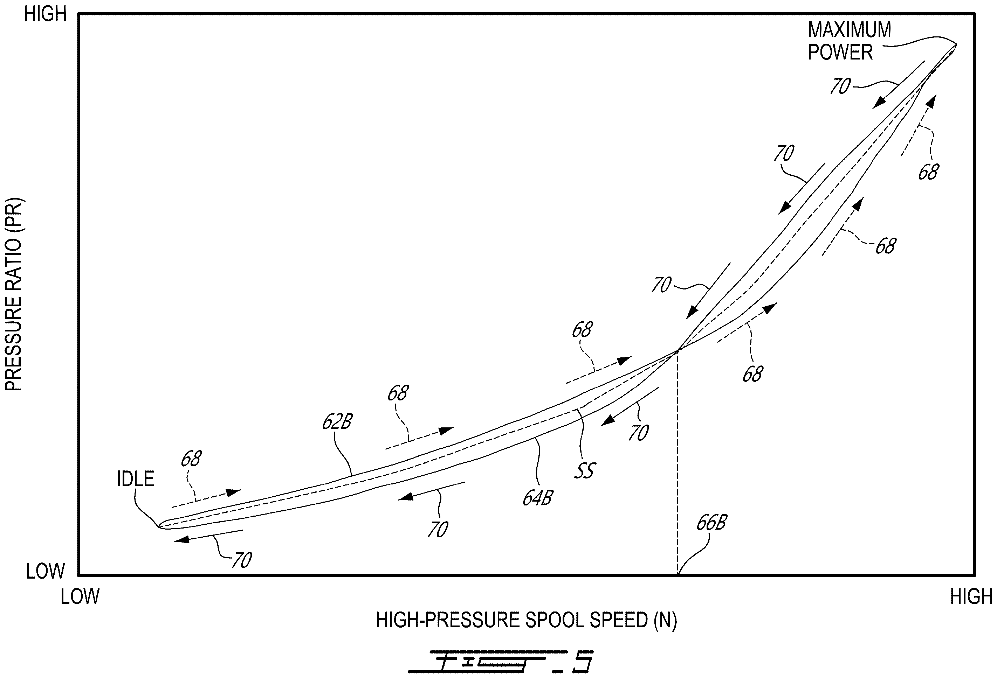

FIG. 5 is a plot schematically showing an exemplary baseline first relationship 62B between the PR across at least part of compressor 22 of engine 10 and rotational speed N of the spool including compressor 22 during a relatively high/fast acceleration of the spool, and an exemplary baseline second relationship 64B between the PR across at least part of compressor 22 of engine 10 and rotational speed N of the spool including compressor 22 during a relatively high/fast deceleration of the spool. The plot of FIG. 5 illustrates a baseline (i.e., nominal) transient behavior of compressor 22 of engine 10 fitted with BOV 12 at an intermediate stage of compressor 22. One meaningful parameter for engine 10 in operation is the PR, sometimes also referred to as an engine "runline". An overall PR may be defined as second pressure Pb divided by first pressure Pa (i.e., Pb/Pa) to quantify a total amount of compression provided by compressor 22.

In some embodiments, method 1000 may instead use a partial PR that quantifies an amount of compression provided by only a portion (i.e., some but not all the stages) of compressor 22. In multi-spool engines where the compressor includes two compressor portions that are part of two different spools for example, a spool-specific PR may instead be used. For example, a first PR for a first compressor portion of a first spool may equal the pressure at the outlet of the first compressor portion divided by first pressure Pa, and may be associated with the rotational speed of the first spool. Similarly, a second PR for a second compressor portion of a second spool may equal second pressure Pb divided by the pressure at the inlet of the second compressor portion, and may be associated with the rotational speed of the second spool.

A steady-state operating line SS is shown as a broken line and illustrates a steady-state operating runline as a function of rotational speed N of the high-pressure spool. In other words, steady-state operating line SS plots PRs obtained at different steady-state rotational speeds N of the high-pressure spool. Baseline first relationship 62B and baseline second relationship 64B show runlines for fast accelerations and decelerations respectively from idle speed (low power with BOV 12 open) to maximum power speed (high power with BOV 12 closed).

Following first arrows 68 shown in broken lines during an acceleration of the high-pressure spool, baseline first relationship 62B (at a particular speed) is initially higher than steady-state operating line SS because of the excess fuel used to accelerate engine 10 and raise second pressure Pb. However, eventually baseline first relationship 62B falls below steady-state operating line SS. This is caused by BOV 12 having a finite response time that takes an amount of time to close, and is therefore lagging from its steady-state position. The additional bleed air compared to the steady state position causes second pressure Pb to be reduced and thus the baseline first relationship 62B falls below the steady-state operating line SS.

Following second arrows 70 shown in solid lines during the deceleration, baseline second relationship 64B (at a particular speed) is initially higher than steady-state because BOV 12 is closed to a greater degree than for its steady-state position. This results in less bleed less air and thus temporarily keeping second pressure Pb and baseline second relationship 64B higher than steady-state operating line SS. Eventually, as BOV 12 reaches a fully-open configuration, baseline second relationship 64B falls below steady-state operating line SS because of the fuel flow reduction that is used to decelerate engine 10. By comparison, in an engine without BOV 12, the acceleration runline would always be higher (at a speed) than steady-state operating line SS and the deceleration runline would always be lower than steady-state operating line SS. The runline inversion characteristic that is shown in FIG. 5 between baseline first relationship 62B and baseline second relationship 64B is caused by the finite response time of BOV 12 located at an intermediate (i.e., interstage) position along compressor 22.

It can be observed that baseline first relationship 62B and baseline second relationship 64B during acceleration and deceleration respectively intersect each other at baseline cross-over rotational speed 66B, which may be around a mid-point between the low power idle speed and the maximum power speed. Baseline cross-over rotational speed 66B may be used in method 1000 to detect a performance degradation of BOV 12 because baseline cross-over rotational speed 66B is directly related to the response time of BOV 12 for a given operating condition of engine 10. The term "baseline" in baseline first relationship 62B, baseline second relationship 64B and baseline cross-over rotational speed 66B is intended to represent characteristics of a BOV having an adequate (e.g., optimal) performance. For example, in some embodiments, engine 10 having a new BOV 12 may be operated to generate baseline first relationship 62B and baseline second relationship 64B so that baseline cross-over rotational speed 66B may be determined for that specific BOV 12 and engine combination. In some embodiments, a more universal baseline cross-over rotational speed 66B may be obtained from a manufacturer of BOV 12 and of the engine 10 then used in method 1000 to assess the performance of BOV 12. In some embodiments, baseline cross-over rotational speed 66B may be obtained from modeling and simulation, or may be determined in an empirical manner.

FIG. 6 is a plot schematically showing an exemplary actual first relationship 62A between the PR across at least part of compressor 22 of engine 10 and rotational speed N of the spool including compressor 22 during a relatively high/fast acceleration of the spool, and an exemplary actual second relationship 64A between the PR across at least part of compressor 22 of engine 10 and rotational speed N of the spool including compressor 22 during a relatively high/fast deceleration of the spool. Baseline first relationship 62B and baseline second relationship 64B are also shown in FIG. 6 for comparison with actual first relationship 62A and actual second relationship 64A.

Actual first relationship 62A and actual second relationship 64A may be acquired and used in the assessment of BOV 12 only when the acceleration and deceleration are each sufficiently high to exhibit the cross-over (inversion) behaviour that produces cross-over rotational speed 66A at the intersection of actual first relationship 62A and actual second relationship 64A. In some embodiments, one or more acceleration and/or deceleration thresholds may be used to determine if the acceleration and deceleration are adequate for actual first relationship 62A and actual second relationship 64A to be used in method 1000. For example, method 1000 may include determining that an acceleration rate of the spool during the acceleration of the spool meets an acceleration criterion (e.g., the acceleration rate meets or exceeds an acceleration threshold). Method 1000 may also include determining that a deceleration rate of the spool during the deceleration of the spool meets a deceleration criterion (e.g., the deceleration rate meets or exceeds a deceleration threshold). In some embodiments, the determination of whether the acceleration and/or deceleration are sufficient fast could be based on a prescribed time criterion such as faster than 5 seconds from idle speed to the speed at maximum power, or a pilot-input criterion determined from a magnitude and duration of a pilot input received via power/thrust lever for example.

In some embodiments, actual first relationship 62A and actual second relationship 64A may not necessarily extend entirely from the idle speed to the maximum power speed. In some embodiments, actual first relationship 62A and actual second relationship 64A may only extend partially between the idle speed to the maximum power speed. For example, engine 10 may be operated to cause the acceleration and the deceleration of the spool between first and second rotational speeds that are sufficiently far apart to cause modulation of BOV 12 so that actual cross-over rotational speed 66A may be determined and compared against rotational speed threshold 60. In other words, the first and second rotational speeds may be selected so that actual cross-over rotational speed 66A is between the first and second rotational speeds.

Actual first relationship 62A may differ from baseline first relationship 62B during the otherwise same or similar operating conditions due to a performance degradation (e.g., increased response time, unacceptable lag, slow modulation time) of BOV 12. Similarly, actual second relationship 64A may differ from baseline second relationship 64B during the otherwise same operating conditions due to the same performance degradation of BOV 12. In the actual (current) degraded condition, BOV 12 may close later (i.e., at higher rotational speed N) during acceleration and may reopen later (i.e., at lower rotational speed) during deceleration. This results in shifting actual cross-over rotational speed 66A toward the left in FIG. 6 to a lower rotational speed N compared to baseline cross-over rotational speed 66B. Actual cross-over rotational speed 66A may correspond to the intersection of actual first relationship 62A with actual second relationship 64A. The magnitude of the downward shift of actual cross-over rotational speed 66A from baseline cross-over rotational speed 66B may then be used to assess the performance of BOV 12 and, when applicable, detect the performance degradation of BOV 12 caused by the increased response time of BOV 12 in response to a change in pressure differential (e.g., Pb-Px) across valve member 50 of BOV 12.

Method 1000 may detect the performance degradation when actual cross-over rotational speed 66A is outside a prescribed margin M away from baseline cross-over rotational speed 66B. Prescribed margin M may be defined by rotational speed threshold 60 stored in memory 56. Rotational speed threshold 60 may be determined by subtracting a prescribed value from baseline cross-over speed 66B. In some embodiment, the performance degradation may be detected when actual cross-over rotational speed 66A of the high-pressure spool is lower than rotational speed threshold 60 meaning that the performance of BOV 12 may no longer be optimal or acceptable and a maintenance action may be required.

Rotational speed threshold 60 may be static, i.e., constant in all operating conditions. Alternatively, rotational speed threshold 60 may be variable to accommodate different operating conditions. For example, rotational speed threshold 60 may be retrieved from a look-up table stored in memory 56 based on a parameter associated with engine 10 and that may influence actual cross-over rotational speed 66A. For example, rotational speed threshold 60 may be variable as a function of an ambient condition in which engine 10 is operating. The ambient condition may include an outside temperature, an altitude of an aircraft being propelled by engine 10 and/or an airspeed of the aircraft.

In some embodiments, method 1000 may be performed by an EEC of engine 10 and may be performed live (i.e., in real-time) during flight of the aircraft to which engine 10 is mounted. In the event of a detection of an unacceptable performance degradation of BOV 12, method 1000 may include generating an annunciation in the cockpit of the aircraft to alert the flight crew. In some embodiments, method 1000 may be performed in a post-flight data processing algorithm using computer 38, which may be separate from the EEC.

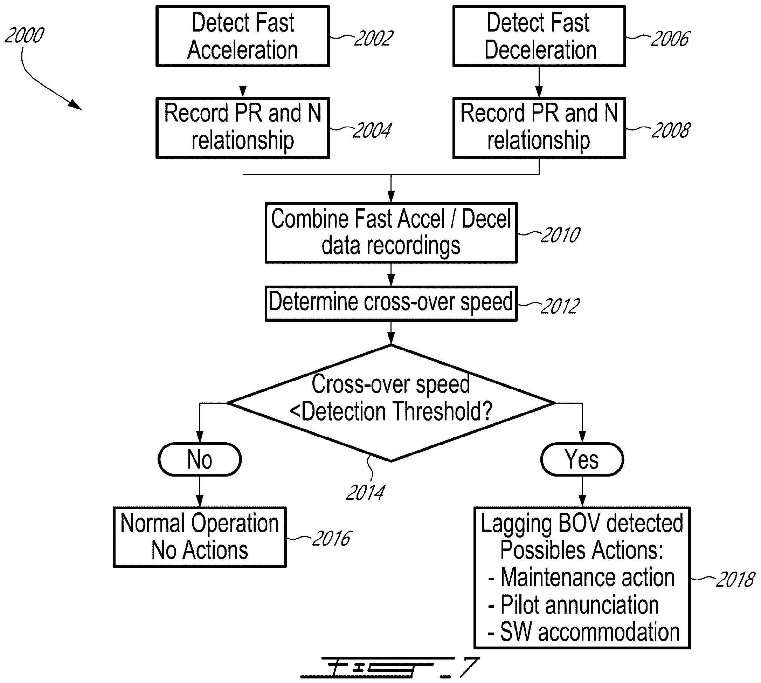

FIG. 7 is a flow diagram of another exemplary method 2000 for detecting the performance degradation of BOV 12 or of another bleed-off valve without direct positional feedback from BOV 12. Method 2000 may be performed using system 13 described herein or using another system. For example, machine-readable instructions 58 may be configured to cause computer 38 to perform at least part of method 2000. Aspects of method 2000 may be combined with aspects of method 1000 described above. Method 2000 may be performed when BOV 12 is installed in a compressor section of engine 10 (e.g., in situ). Method 2000 may include elements of system 13.

At block 2002, a sufficiently fast acceleration of engine 10 may be detected and actual first relationship 62A may be recorded by computer 38 at block 2004. At block 2006, a sufficiently fast deceleration of engine 10 may be detected and actual second relationship 64A may be recorded by computer 38 at block 2008. At block 2010, actual first relationship 62A and actual second relationship 64A may be combined together to subsequently determine actual cross-over rotational speed 66A at block 2012. Actual cross-over rotational speed 66A may correspond to the intersection point of actual first relationship 62A and actual second relationship 64A where the PR of actual first relationship 62A during acceleration is substantially equal to the PR of actual second relationship 64A during deceleration. In various embodiments, actual first relationship 62A and actual second relationship 64A may be recorded in different orders and not necessarily one immediately after the other.

At block 2014, actual cross-over rotational speed 66A is compared to rotational speed threshold 60 to determine if an undesirable performance degradation exists with BOV 12. For example, if actual cross-over rotational speed 66A is below rotational speed threshold 60 (e.g., 75% of the rotational speed at maximum power output), an undesirable performance degradation (e.g., increased response time) may be detected. Prescribe margin M (shown in FIG. 6) and hence rotational speed threshold 60 may be established based on engine testing and characterisation to determine a maximum amount of increased time response of BOV 12 that can be tolerated during operation of engine 10, and in consideration of engine-to-engine variability as well as the accuracy of sensor(s) 32, 34, 36, 40. The 75% value is only an example of a speed threshold. Each engine 10 has a 100% speed value (e.g., 100% = 50,000 rpm) which may be different for each engine model and which may be defined as the aero design speed point (i.e., not necessarily the maximum rotational speed).

If no performance degradation is detected, the normal operation of engine 10 may continue at block 2016 and no corrective action may be required. However, if an unacceptable performance degradation is detected, an annunciation may be generated in the cockpit, a maintenance action may be performed, and/or a software (SW) accommodation may be executed as explained above.

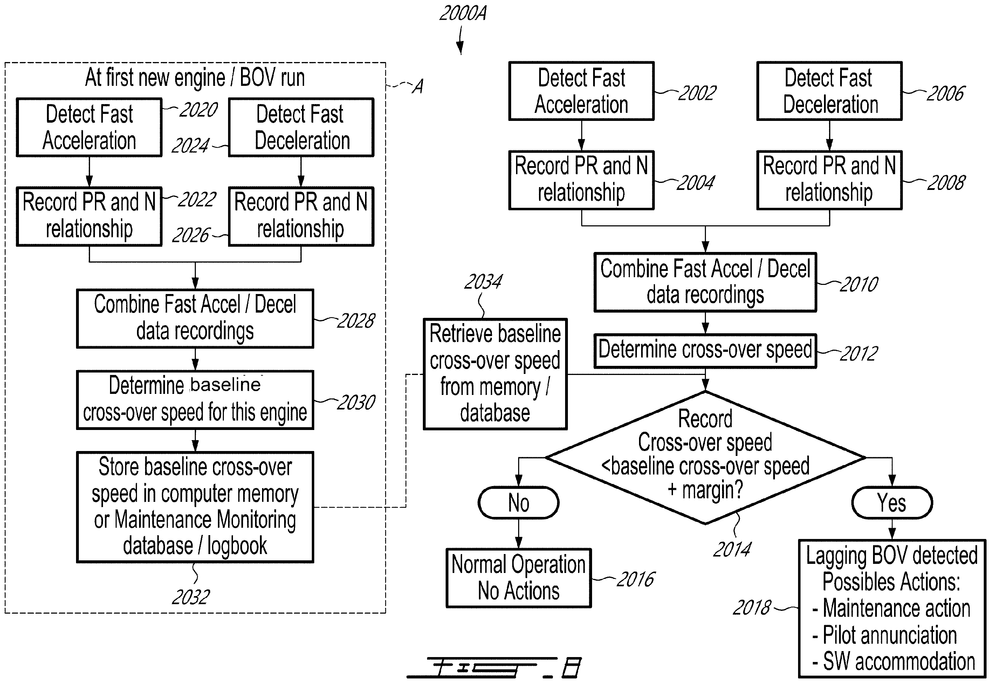

FIG. 8 is a flow diagram of another exemplary method 2000A for detecting the performance degradation of BOV 12 or of another bleed-off valve without direct positional feedback from BOV 12. Method 2000A may be performed using system 13 described herein or using another system. For example, machine-readable instructions 58 may be configured to cause computer 38 to perform at least part of method 2000A. Aspects of method 2000A may be combined with aspects of method 1000 described above. Method 2000A may be performed when BOV 12 is installed in a compressor section of engine 10 (e.g., in situ). Method 2000A may include elements of system 13. Method 2000A may include steps/actions of method 2000 and like blocks are identified using like reference numerals.

Method 2000 described above may use a fixed rotational speed threshold 60 that is universal for this type (i.e., model number) of BOV 12 and this type (i.e., model number) of engine 10. In other words, rotational speed threshold 60 may be universal and applicable to a plurality of engines. However, method 2000A may instead use a rotational speed threshold 60 that is tailored for this specific combination of engine 10 (e.g., serial no. 1234) and BOV 12. The engine-specific rotational speed threshold 60 may then take into account engine-to-engine variations. For example, method 2000A may instead detect a shift in cross-over speed from baseline cross-over rotational speed 66B determined during an initial engine run cross-over speed detection. The steps/actions in box A in dashed line may be performed only during a specific engine first run (e.g., on production acceptance pass-off) when engine 10 and BOV 12 are in a newer state with less utilization and suitable to establish an acceptable baseline.

At block 2020, a sufficiently fast acceleration of engine 10 may be detected and baseline first relationship 62B may be recorded by computer 38 at block 2022. At block 2024, a sufficiently fast deceleration of engine 10 may be detected and baseline second relationship 64B may be recorded by computer 38 at block 2026. At block 2028, baseline first relationship 62B and baseline second relationship 64B may be combined together to subsequently determine baseline cross-over rotational speed 66B at block 2030. Baseline cross-over rotational speed 66B may correspond to the intersection point of baseline first relationship 62B and baseline second relationship 64B where the PR of baseline first relationship 62B during acceleration is substantially equal to the PR of baseline second relationship 64B during deceleration.

At block 2032, baseline cross-over rotational speed 66B may stored in (e.g., nonvolatile) memory 56, in a log book, or in another database. At block 2034, baseline cross-over rotational speed 66B may be retrieved and used in block 2014 with an acceptable margin M. In block 2014, actual cross-over rotational speed 66A is then compares to baseline cross-over rotational speed 66B retrieved from memory 56 and combined with margin M. For example, baseline cross-over rotational speed 66B for engine serial no. 1234 could be 81% of the speed at maximum power output during the first engine run and margin M of about 3% may be deemed allowed for any engine of the same type. For this specific engine (i.e., serial no. 1234), the detection of the performance degradation would then happen when actual cross-over rotational speed 66A is equal to or less than 78% (i.e., 81% minus 3%) of the speed at maximum power output. The use of an engine-specific rotational speed threshold 60 may be more complex but more sensitive due to the engine-to-engine variability being accounted for to potentially allow the use of a smaller margin M.

The embodiments described in this document provide non-limiting examples of possible implementations of the present technology. Upon review of the present disclosure, a person of ordinary skill in the art will recognize that changes may be made to the embodiments described herein without departing from the scope of the present technology.

## Claims

1. A method for detecting a performance degradation of a pneumatic bleed-off valve (12) installed in a compressor section of a gas turbine engine (10), the method comprising:
operating the gas turbine engine (10) to cause an acceleration of a spool of the gas turbine engine (10) from a first rotational speed to a second rotational speed, the spool including a compressor (22) of the gas turbine engine (10);
during the acceleration of the spool, acquiring a first relationship (62A) between a pressure ratio across the compressor (22) and a rotational speed of the spool;
operating the gas turbine engine (10) to cause a deceleration of the spool from the second rotational speed to the first rotational speed;
during the deceleration of the spool, acquiring a second relationship (64A) between the pressure ratio across the compressor (22) and the rotational speed of the spool;
determining a cross-over rotational speed (66A) corresponding to an intersection of the first relationship (62A) and the second relationship (64A), the cross-over rotational speed (66A) being between the first rotational speed and the second rotational speed; and
detecting the performance degradation of the pneumatic bleed-off valve (12) when the cross-over rotational speed (66A) is lower than a rotational speed threshold (60).

2. The method as defined in claim 1, wherein the performance degradation is an increased response time of the pneumatic bleed-off valve (12).

3. The method as defined in claim 1 or 2, comprising restricting an allowable acceleration of the gas turbine engine (10) after detecting the performance degradation.

4. The method as defined in claim 1, 2 or 3, wherein the pressure ratio across the compressor (22) is an overall pressure ratio across an entirety of the compressor (22).

5. The method as defined in claim 1, 2 or 3, wherein the pressure ratio across the compressor (22) is a pressure ratio across only part of the compressor (22) less than an entirety of the compressor (22).

6. The method as defined in any preceding claim, wherein the method is performed during flight of an aircraft propelled by the gas turbine engine (10).

7. The method as defined in any preceding claim, wherein the rotational speed threshold (60) is variable based on an ambient condition in which the gas turbine engine (10) is operating.

8. The method as defined in any preceding claim, wherein the rotational speed threshold (60) is universal for a plurality of gas turbine engines (10).

9. The method as defined in any of claims 1 to 7, comprising:
receiving an engine-specific baseline cross-over rotational speed (66B) exhibited by the pneumatic bleed-off valve (12) installed in the gas turbine engine (10) when the pneumatic bleed-off valve (12) was in a new state; and
determining the rotational speed threshold (60) based on the engine-specific baseline cross-over rotational speed (66B),
optionally wherein determining the rotational speed threshold (60) includes subtracting a prescribed value from the engine-specific baseline cross-over rotational speed (66B).

10. A method for detecting a slow modulation time of a pneumatically-actuated bleed-off valve (12) without positional feedback from the bleed-off valve (12), the bleed-off valve (12) being installed at an intermediate stage of a compressor section of a gas turbine engine (10), the method comprising:
operating the gas turbine engine (10) to cause an acceleration of a spool of the gas turbine engine from a first rotational speed to a second rotational speed, the spool including a compressor (22) of the gas turbine engine (10);
during the acceleration of the spool:
causing the bleed-off valve (12) to transition from an open position to a closed position; and
acquiring a first relationship (62A) between a pressure ratio across the compressor (22) and a rotational speed of the spool;
operating the gas turbine engine (10) to cause a deceleration of the spool from the second rotational speed to the first rotational speed;
during the deceleration of the spool:
causing the bleed-off valve (12) to transition from the closed position to the open position; and
acquiring a second relationship (64A) between the pressure ratio across the compressor (22) and the rotational speed of the spool;
determining a cross-over rotational speed (66A) corresponding to an intersection of the first relationship (62A) and the second relationship (62B), the cross-over rotational speed (66A) being between the first rotational speed and the second rotational speed; and
detecting the slow modulation time of the bleed-off valve (12) when the cross-over rotational speed (66A) is lower than a rotational speed threshold (60).

11. The method as defined in claim 10, comprising:
while operating the gas turbine engine (10) with the bleed-off valve (12) in a new state, determining a baseline cross-over rotational speed (66B) specifically associated with the bleed-off valve (12) in the new state; and
before detecting the slow modulation time of the bleed-off valve (12), determining the rotational speed threshold (60) by adding a margin (M) to the baseline cross-over rotational speed (66B).

12. The method as defined in claim 10 or 11, wherein:
the slow modulation time of the pneumatically-actuated bleed-off valve (12) is detected during flight of an aircraft propelled by the gas turbine engine (10); and
the method includes generating an annunciation in response to detecting the slow modulation time.

13. The method as defined in any preceding claim, comprising, before detecting the slow modulation time of the pneumatically-actuated bleed-off valve (12):
determining that an acceleration rate of the spool during the acceleration of the spool meets an acceleration criterion; and
determining that a deceleration rate of the spool during the deceleration of the spool meets a deceleration criterion.

14. A system (13) for detecting a performance degradation of a pneumatic bleed-off valve (12) installed in a compressor section of a gas turbine engine (10), the system comprising:
sensors (32,34,36,40) configured to acquire:
a rotational speed of a spool of the gas turbine engine (10), the spool including a compressor (22) of the gas turbine engine (10); and
a pressure ratio across the compressor (10);
one or more data processors (54); and
non-transitory machine-readable memory (56) storing:
a first relationship (62A) between the pressure ratio across the compressor (22) and the rotational speed of the spool acquired during an acceleration of the spool using the sensors (32,34,36,40);
a second relationship (64A) between the pressure ratio across the compressor (22) and the rotational speed of the spool acquired during a deceleration of the spool using the sensors (32,34,36,40); and
instructions (58) executable by the one or more data processors (54) and configured to cause the one or more data processors (54) to:
determine a cross-over rotational speed (66A) corresponding to an intersection of the first relationship (62A) and the second relationship (64A); and
detect the performance degradation of the pneumatic bleed-off valve (12) when the cross-over rotational speed (66A) is lower than a rotational speed threshold (60),
optionally wherein:
the non-transitory machine-readable memory (56) stores an engine-specific baseline cross-over rotational speed (66B) exhibited by the pneumatic bleed-off valve (12) when the pneumatic bleed-off valve (12) was in a new state; and
the instructions (58) are configured to cause the one or more data processors (54) to determine the threshold (60) based on the engine-specific baseline cross-over rotational speed (66B),
further optionally wherein:
the sensors (40) are configured to acquire an ambient condition in which the gas turbine engine (10) is operating; and
the instructions (58) are configured to cause the one or more data processors (54) to determine the threshold (60) based on the ambient condition.

15. The system (13) as defined in claim 14, wherein:
the one or more data processors (54) are part of a controller of the gas turbine engine (10) and disposed onboard an aircraft propelled by the gas turbine engine (10); and/or
the system (13) is devoid of positional feedback from the pneumatic bleed-off valve (12).
